# FASCICULE DE BREVET EUROPEEN

(11) **EP 0 746 487 B1**
(45) Date de publication et mention de la délivrance du brevet: **27.05.1998**
(21) Numéro de dépôt: 95909838.5
(22) Date de dépôt: 16.02.1995
(51) Int. Cl.: B60T 13/567

(54) **SERVOMOTEUR PNEUMATIQUE D'ASSISTANCE AU FREINAGE A ENVELOPPE SYMETRIQUE**
PNEUMATISCHER BREMSKRAFTVERSTÄRKER MIT SYMMETRISCHEM GEHÄUSE
PNEUMATIC BRAKE SERVO WITH A SYMMETRICAL SHELL

(30) Priorité: 04.03.1994 FR 9402498
(43) Date de publication de la demande: 11.12.1996
(73) Titulaire: Bosch Systemes de Freinage, 93700 Drancy (FR)
(72) Inventeur: GAUTIER, Jean-Pierre, F-93600 Aulnay-sous-Bois (FR); VERBO, Ulysse, F-93600 Aulnay-sous-Bois (FR); SPINELLO, Salvatore, F-93700 Drancy (FR)
(74) Mandataire: Bentz, Jean-Paul
(86) Numéro de dépôt international: FR9500186
(87) Numéro de publication internationale: WO9523718

(56) Documents cités:
- DE-A- 4 006 096

## Description

La présente invention a pour objet un servomoteur pneumatique, du type de ceux qui sont utilisés pour fournir une assistance au freinage des véhicules automobiles.

De tels servomoteurs comportent de façon classique une enveloppe comportant un cylindre et un couvercle possédant un axe de symétrie, l'intérieur de l'enveloppe étant séparé de façon étanche par une structure de paroi mobile, en une chambre avant reliée en permanence à une source de dépression, et une chambre arrière reliée sélectivement à la chambre avant ou à une source de pression par une valve à trois voies disposée dans une partie tubulaire arrière de la structure de paroi mobile coulissant de façon étanche dans le couvercle et actionnée par une tige de commande.

Un servomoteur de ce type est connu par exemple du DE-A-4 006 096.

De très nombreux documents concernent ce type de servomoteurs pneumatiques. Dans toutes ces réalisations connues, l'enveloppe du servomoteur est typiquement formée d'une demi-coquille avant, encore appelée cylindre, et d'une demi-coquille arrière, encore appelée couvercle, le cylindre et le couvercle étant rendus solidaires l'un de l'autre par sertissage en enserrant entre eux un bourrelet périphérique extérieur de la membrane déroulante assurant l'étanchéité entre les chambres avant et arrière.

Le couvercle est classiquement destiné à être fixé sur le tablier du véhicule, du côté du compartiment moteur, et comporte une extension cylindrique axiale, encore appelée cheminée, dirigée vers l'arrière et pénétrant dans l'habitacle du véhicule. Cette cheminée reçoit à coulissement étanche la partie tubulaire arrière de la structure de paroi mobile contenant la valve à trois voies.

Le cylindre quant à lui comporte une face plane autour de l'axe de symétrie du servomoteur, qui est destinée à recevoir une bride de fixation d'un maître-cylindre, actionné par une tige de poussée solidaire de la structure de paroi mobile du servomoteur, lors d'un actionnement de ce dernier.

Il s'ensuit que le cylindre et le couvercle, constituant ensemble l'enveloppe du servomoteur, forment deux composants différents. Ceci implique une multiplication par deux des temps et des coûts de conception, de fabrication, de stockage et de gestion. En particulier, le couvercle, comportant la cheminée décrite plus haut, constitue un composant assez délicat et coûteux à fabriquer du fait de sa forme complexe, le rebut en chaîne de fabrication ou d'assemblage étant non négligeable.

La présente invention a donc pour but de résoudre ce problème, en proposant un servomoteur dont les coûts de fabrication de l'enveloppe soient réduits dans une large mesure.

Dans ce but, l'invention propose un servomoteur du type rappelé ci-dessus, dans lequel le cylindre et le couvercle du servomoteur sont constitués de deux demi-coquilles identiques.

D'autres buts, caractéristiques et avantages de la présente invention ressortiront clairement de la description qui va suivre d'un mode de réalisation donné à titre d'exemple non limitatif, en référence aux dessins annexés sur lesquels :
- La Figure 1 représente une vue de côté en coupe transversale d'un servomoteur pneumatique d'assistance au freinage réalisé selon la présente invention;
- les Figures 2 et 3 représentent des vues en perspective des demi-coquilles formant l'enveloppe du servomoteur de la Figure 1;
- la Figure 4 représente une demi-vue de côté du servomoteur de la Figure 1;
- la Figure 5 représente une vue partielle agrandie d'une coupe longitudinale du servomoteur selon la ligne V-V de la Figure 4;
- la Figure 6 représente une vue en coupe d'une variante du clapet anti-retour équipant le servomoteur de la Figure 1, et
- la Figure 7 représente une vue analogue à celle de la Figure 5 d'une variante de réalisation des demi coquilles formant l'enveloppe du servomoteur.

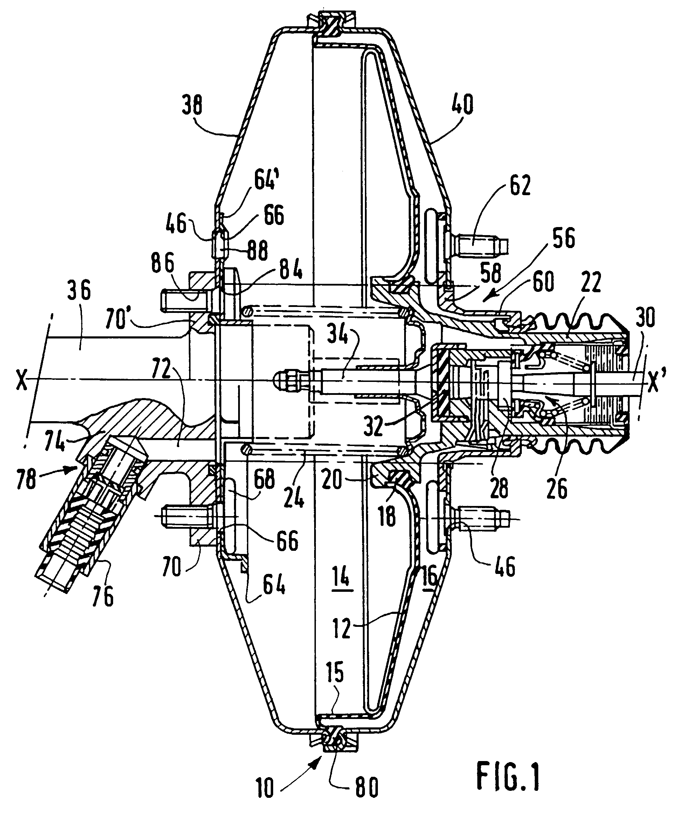

La Figure 1 représente en coupe un servomoteur pneumatique d'assistance au freinage, prévu pour être placé de façon habituelle entre la pédale de frein d'un véhicule et le maître-cylindre commandant le circuit de freinage de ce véhicule. Par convention, on appellera "avant" du servomoteur la partie de ce dernier tournée vers le maître-cylindre et "arrière" du servomoteur la partie tournée vers la pédale de frein. Sur la Figure 1, l'avant est ainsi à gauche et l'arrière à droite.

Le servomoteur représenté comprend une enveloppe extérieure 10 en forme de coquille présentant une symétrie de révolution autour d'un axe X-X'. La structure interne du servomoteur, de même que son fonctionnement, ne font pas partie de la présente invention et ne seront rappelés ici que pour mémoire.

Une structure de paroi mobile 12 délimite à l'intérieur de l'enveloppe une chambre avant 14 et une chambre arrière 16. La paroi mobile 12 est associée à une membrane déroulante souple 15, par exemple en élastomère, dont le bord périphérique intérieur est reçu de façon étanche grâce à un bourrelet 18, dans un piston creux d'assistance 20 disposé selon l'axe X-X'.

Le piston creux 20 se prolonge vers l'arrière sous la forme d'une partie tubulaire 22 qui traverse de façon étanche la paroi arrière de l'enveloppe 10. Un ressort de compression 24 interposé entre le piston 20 et la paroi avant de l'enveloppe 10 maintient normalement le piston 20 dans la position arrière de repos illustrée sur la Figure 1, dans laquelle la chambre arrière 16 présente son volume minimal et la chambre avant 14 son volume maximal.

Dans la partie tubulaire arrière 22 du piston 20 est logée une valve à trois voies 26, mettant sélectivement en communication la chambre arrière 16 avec la chambre avant 14, reliée en permanence avec une source de dépression, ou avec une source de pression, constituée dans l'exemple représenté par l'atmosphère extérieure au servomoteur. Le fonctionnement de la valve à trois voies 26 est commandé par un plongeur 28 solidaire d'une tige de commande 30, dont l'extrémité arrière (non représentée), qui fait saillie hors de la partie tubulaire 22, est commandée directement par la pédale de frein du véhicule (non représentée).

Lorsque la tige de commande 30 est en position arrière de repos, la valve 26 établit normalement une communication entre les deux chambres 14 et 16 du servomoteur. Lorsque le conducteur du véhicule actionne la pédale de frein, il en résulte un mouvement vers l'avant de la tige de commande 30 et du plongeur 28, qui actionne alors la valve 26.

Dans un premier temps, la valve 26 isole l'une de l'autre les chambres 14 et 16, puis, dans un deuxième temps, établit la communication entre la chambre arrière 16 et l'atmosphère présente autour de la tige de commande 30.

De l'air à la pression atmosphérique est ainsi admis dans la chambre arrière 14, créant une différentielle de pressions sur les deux faces de la paroi mobile 12, et engendrant par conséquence une force d'assistance sur le piston 20, s'ajoutant à la force d'entrée appliquée sur la tige de commande 30, et transmise par l'intermédiaire d'un disque de réaction 32, à une tige de poussée 34 actionnant un piston (non représenté) du maître-cylindre 36.

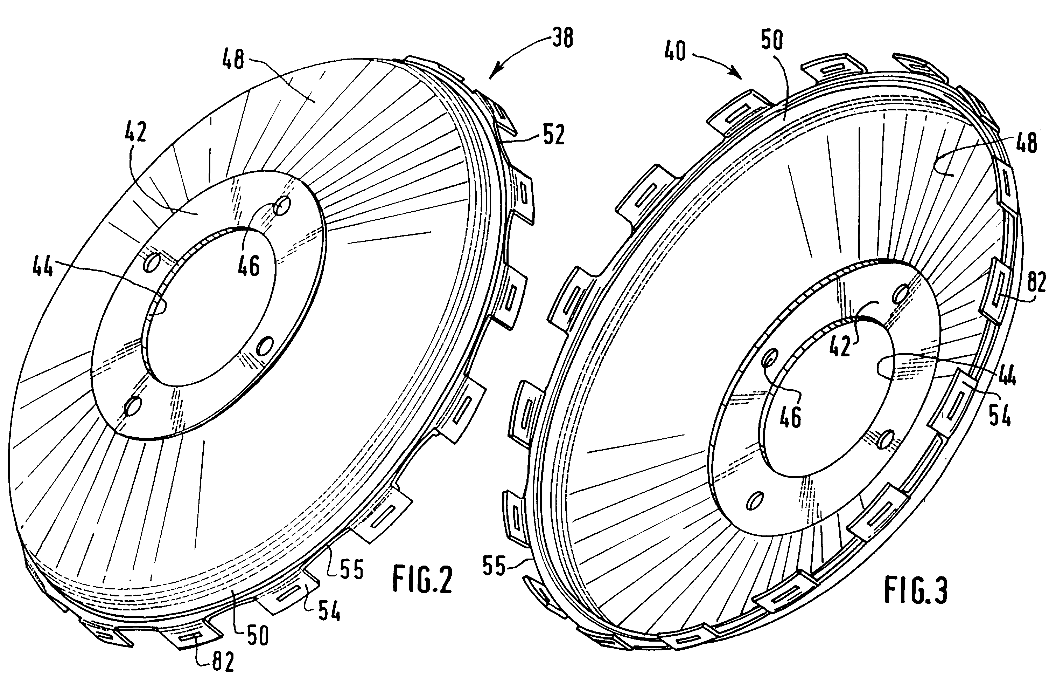

Conformément à la présente invention, l'enveloppe 10 est formée de deux demi-coquilles 38 et 40 identiques, représentées sur les Figures 2 et 3 en perspective, vues de l'extérieur et de l'intérieur. La demi-coquille 38 est par exemple disposée à l'avant du servomoteur et remplace le cylindre traditionnel, et la demi-coquille 40 est disposée à l'arrière du servomoteur et remplace le couvercle traditionnel. De plus, les moitiés supérieure et inférieure de la Figure 1 illustrent deux variantes de réalisation.

On voit sur Les Figures 2 et 3 que chaque demi-coquille 38 ou 40 comporte une partie centrale 42 plane, perpendiculaire à l'axe X-X' quand le servomoteur est assemblé, percée d'une ouverture centrale 44 et d'ouvertures 46 régulièrement réparties autour de l'ouverture centrale 44.

Chaque demi-coquille comporte également une partie intermédiaire 48 de forme généralement tronconique, raccordée à une partie périphérique 50 sensiblement cylindrique. La partie périphérique 50 est formée avec une série de languettes axiales identiques 54, de façon à présenter un bord crénelé. La partie périphérique 50 est de plus formée avec un épaulement radial 52 entre son raccordement avec la partie intermédiaire 48 et le fond des créneaux entre les languettes 54, c'est à dire le bord 55 adjacent à une languette 54.

Les languettes 54 sont régulièrement réparties le long du bord périphérique de la partie 50, de telle sorte que la distance circonférentielle entre deux languettes consécutives soit légèrement supérieure à la largeur commune de chaque languette. En d'autres termes, la longueur circonférentielle du bord 55 est légèrement supérieure à la longueur circonférentielle des languettes 54. De façon avantageuse, on pourra donner aux languettes 54 une forme légèrement trapézoïdale isocèle, la petite base de ce trapèze étant dirigée vers l'extérieur. La longueur circonférentielle des languettes sera alors mesurée sur la grande base de ce trapèze.

De plus, le diamètre extérieur de l'épaulement radial 52, dans sa partie située entre deux languettes, est légèrement inférieur au diamètre intérieur des languettes axiales, ou encore le rayon extérieur du bord 55, compté à partir de l'axe X-X', est légèrement inférieur au rayon intérieur des languettes axiales 54, de sorte que les languettes 54 de l'une des demi-coquilles puissent recouvrir le bord 55 de l'autre demi-coquille, et s'interdigiter avec les languettes 54 de l'autre demi-coquille.

La demi-coquille formant la partie arrière de l'enveloppe 10 du servomoteur, 40 en l'occurrence, est assemblée avec une pièce 56, comportant une partie avant annulaire 58 reçue de façon étanche dans l'ouverture 44, et une partie arrière tubulaire 60 dans laquelle coulisse la partie arrière tubulaire 22 du piston 20. Des vis 62 sont disposées dans les ouvertures 46 pour fixer le servomoteur sur le tablier séparant le compartiment moteur de l'habitacle du véhicule. Les vis 62 participeront avantageusement à la fixation de la partie annulaire 58 de la pièce 56 sur la demi-coquille 40.

La demi-coquille formant la partie avant de l'enveloppe du servomoteur, 38 en l'occurrence, est assemblée avec une pièce annulaire 64 ou 64', de dimensions correspondant à celles de la partie centrale plane 42 de la demi-coquille 38, selon les deux variantes illustrées sur les moitiés supérieure et inférieure de la Figure 1.

Sur la moitié inférieure de la Figure 1, on voit que la pièce annulaire 64 est formée avec une ouverture centrale de dimensions adaptées à celles du maître-cylindre 36 et des ouvertures 66 régulièrement réparties autour de cette ouverture centrale et correspondant en nombre et en disposition géométrique aux ouvertures 46 de la demi-coquille 38, de sorte que les ouvertures 46 et 66 soient alignées axialement et permettent la fixation sur la demi-coquille 38 du maître-cylindre 36 par l'intermédiaire de vis 68 coopérant avec une bride de montage 70 du maître-cylindre.

Le maître-cylindre 36 est légèrement modifié par rapport à un maître-cylindre classique, et comporte un passage 72 traversant la bride 70 et débouchant dans un raccord 74. Le raccord 74 est destiné à recevoir un embout 76 de raccordement à une source de dépression, telle que la tubulure d'admission d'un moteur thermique ou une pompe à vide, l'embout 76 comportant un clapet anti-retour 78.

D'après les explications qui précédent, on aura compris comment l'invention peut être mise en oeuvre. La partie arrière du servomoteur est tout d'abord constituée, en assemblant de façon étanche une demi-coquille avec la pièce 56, puis en fixant les vis 62, par exemple par sertissage, sur la demi-coquille, et enfin en disposant dans cet ensemble le mécanisme interne du servomoteur, c'est à dire le piston 20 avec la paroi mobile 12, la tige de poussée 34, l'ensemble de valve à trois voies 26 et la tige de commande 30.

Parallèlement, la partie avant du servomoteur est constituée en assemblant une demi-coquille avec la pièce annulaire 64, puis en fixant, par exemple par sertissage, les vis 68.

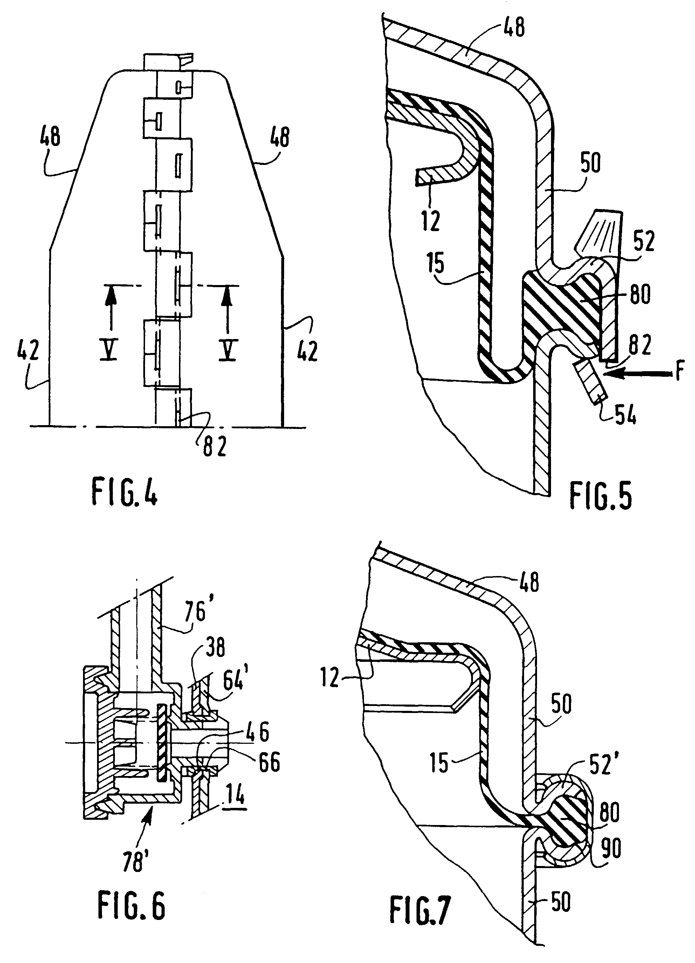

Les parties avant et arrière du servomoteur peuvent alors être assemblées l'une avec l'autre, en interposant entre elles le ressort de compression 24, et le bourrelet périphérique extérieur 80 de la membrane souple 15. Au début de l'opération d'assemblage, les languettes 54 de l'une des demi-coquilles viennent s'intercaler entre les languettes 54 de l'autre demi-coquille, grâce aux dimensions circonférentielles respectives des languettes et des espaces entre les languettes, et s'interdigiter, grâce aux diamètres respectifs de l'intérieur des languettes et de l'extérieur de l'épaulement 52 entre deux languettes, comme on l'a représenté sur la Figure 4, le mouvement d'assemblage étant de plus facilité si l'on a donné aux languettes la forme trapézoïdale décrite plus haut.

Pour terminer l'opération d'assemblage, les deux demi-coquilles 38 et 40 sont solidarisées l'une à l'autre, par exemple par sertissage, comme on le voit mieux sur les Figures 4 et 5. A cet effet, on pourra prévoir de former une prédécoupe 82 parallèlement au bord libre de chaque languette. Un tel sertissage pourra être effectué de façon conventionnelle en pressant les deux demi-coquilles l'une contre l'autre, puis en appliquant sur chaque languette, à l'aide d'un poinçon (non représenté), une force dans le sens de la flèche F sur la Figure 5 sur la partie de languette voisine de la prédécoupe 82 du côté du bord libre de la languette, de façon à déformer la partie externe de chaque languette d'une des demi-coquilles comprise entre la prédécoupe et le bord libre, cette partie déformée venant reposer sur l'épaulement 52 de l'autre demi-coquille.

Après ces opérations, le servomoteur se trouve assemblé et prêt à l'emploi. On peut ainsi fixer sur lui le maître-cylindre 36 au moyen des vis 68, le maître-cylindre étant modifié comme on l'a vu plus haut. Le passage 72 pratiqué dans la bride 70 débouche à l'intérieur de l'ouverture 44 de la demi-coquille 38, la pièce annulaire 64 étant évidemment conformée pour ne pas obstruer ce passage.

L'ensemble servomoteur-maître-cylindre peut alors être installé sur le tablier d'un véhicule, comme un servomoteur classique, à l'aide des vis 62, et être rendu opérationnel en reliant l'embout 76 à une source de dépression.

On voit donc que l'invention permet de réaliser un servomoteur de coûts réduits puisque son enveloppe est essentiellement formée de deux demi-coquilles identiques, et facilement réalisables, et de la pièce additionnelle 56, rapportée sur la demi-coquille arrière. Cette pièce 56, ne subissant aucune contrainte au cours du fonctionnement, peut être réalisée en matériau léger tel qu'un plastique thermoformé. L'invention contribue ainsi également à réduire le poids de l'enveloppe du servomoteur. D'autre part, les autres composants internes du servomoteur tels que la paroi mobile et la valve à trois voies ne sont pas modifiés, de sorte qu'ils peuvent être utilisés dans une enveloppe réalisée selon l'invention. Seul le maître-cylindre comporte une légère modification, sans incidence notable sur son coût de fabrication ni sur son poids.

On a représenté sur la moitié supérieure de la Figure 1 une variante de réalisation, qui permet d'utiliser des maîtres-cylindres conventionnels, sans aucune modification.

On voit sur la moitié supérieure de la Figure 1 que les demi coquilles 38 et 40 sont là encore identiques. Elles comportent chacune une ouverture centrale 44, de diamètre légèrement supérieur à celui des ouvertures centrales des demi-coquilles du mode de réalisation qui vient d'être décrit.

La demi-coquille avant 38 est assemblée avec une pièce annulaire 64' formée avec des ouvertures 66 correspondant en nombre et en disposition géométrique aux ouvertures 46 de la demi-coquille 38, de sorte que les ouvertures 46 et 66 soient alignées axialement.

La pièce annulaire 64' est également formée avec des ouvertures 84 dont le centre est plus proche de l'axe X-X' que celui des ouvertures 66, de sorte que ces ouvertures 84 se trouvent entièrement à l'intérieur du pourtour délimité par l'ouverture 44 de la demi-coquille 38 lorsque cette dernière et la pièce annulaire 64' sont assemblées. Les ouvertures 84 correspondent en nombre et en disposition géométrique aux ouvertures 86 pratiquées dans la bride de montage 70' d'un maître-cylindre conventionnel.

Pour l'assemblage du servomoteur, la partie avant de ce dernier est constituée en réunissant la demi-coquille 38 et la pièce annulaire 64' de sorte que les ouvertures 46 et 66 respectivement soient alignés axialement. Les deux pièces sont alors solidarisées l'une à l'autre par exemple au moyen de rivets étanches 88. On pourra en variante ne disposer de rivets étanches 88 que dans certaines des ouvertures 46-66, et obturer les autres à l'aide de bouchons étanches.

Le reste des opérations d'assemblage de l'enveloppe du servomoteur est alors tout à fait conforme à la description qui a été faite en relation avec le mode de réalisation précédent. Un avantage supplémentaire de ce mode de réalisation réside, outre le fait d'utiliser des maîtres-cylindres conventionnels, dans le fait que l'un des rivets 88 peut être remplacé par embout 76' comportant un clapet anti-retour 78', ainsi qu'on l'a représenté sur la Figure 6, évitant ainsi d'avoir à pratiquer une ouverture supplémentaire dans la demi-coquille 38.

On a représenté sur la Figure 7 une variante du mode de réalisation qui vient d'être décrit, évitant l'opération de sertissage pour l'assemblage final du servomoteur. On voit sur cette Figure que la partie périphérique 50 de chaque demi-coquille est formée avec un épaulement radial continu 52' incurvé de sorte que concavité soit tournée dans le même sens que celle de la demi-coquille

Lors de l'assemblage final, les deux demi-coquilles sont présentées l'une contre l'autre de sorte que le bourrelet périphérique 80 de la membrane 15 soit logé entre les concavités des deux épaulements 52'. Les demi-coquilles 38 et 40 peuvent alors être solidarisées l'une à l'autre par un cerclage 90 venant enserrer les épaulements 52'. Les autres opérations d'assemblage du servomoteur sont identiques à celles qui ont été décrites précédemment.

La présente invention permet donc bien de réaliser un servomoteur particulièrement économique, dont l'enveloppe ne nécessite que la fabrication d'un seul composant, simple à concevoir et à réaliser, et facilitant du même coup la gestion et le stockage des composants du servomoteur.

Bien entendu, l'invention n'est pas limitée au mode de réalisation qui vient d'être décrit, mais elle est au contraire susceptible de recevoir de nombreuses modifications qui apparaîtront à l'homme du métier. C'est ainsi que la partie intermédiaire 48 de chaque demi-coquille peut être plane et dans le même plan que la partie centrale 42, et que le nombre de languettes 54 formées sur la partie terminale de la partie périphérique peut être égal à toute valeur désirée, et on peut en particulier concevoir une seule languette s'étendant sur sensiblement 180 degrés autour de l'axe X-X', ou un nombre réduit de languettes, par exemple entre deux et quatre, chaque languette étant alors sertie en plusieurs points sur l'épaulement de l'autre demi-coquille, avec éventuellement une prédécoupe par point de sertissage.

## Revendications

1. Servomoteur pneumatique d'assistance au freinage, comportant une enveloppe (10) comportant un cylindre (38) et un couvercle (40) possédant un axe de symétrie (X-X'), l'intérieur de l'enveloppe étant séparé de façon étanche par une structure de paroi mobile (12) associée à une membrane déroulante souple (15) en une chambre avant (14) reliée en permanence à une source de dépression, et une chambre arrière (16) reliée sélectivement à la chambre avant (14) ou à une source de pression par une valve à trois voies (26) disposée dans une partie tubulaire arrière (22) de la structure de paroi mobile (12) coulissant de façon étanche dans le couvercle (40) et actionnée par une tige de commande (30), caractérisé en ce que le cylindre (38) et le couvercle (40) du servomoteur sont constitués de deux demi-coquilles identiques (38,40).

2. Servomoteur selon la revendication 1, caractérisé en ce que chaque demi-coquille (38,40) comporte une partie centrale plane (42) perpendiculaire à l'axe de symétrie (X-X') du servomoteur, une partie intermédiaire (48) et une partie périphérique (50) sensiblement cylindrique.

3. Servomoteur selon la revendication 2, caractérisé en ce que la partie centrale plane (42) est formée avec une ouverture centrale (44) et des ouvertures (46) régulièrement réparties autour de l'ouverture centrale (44).

4. Servomoteur selon la revendication 3, caractérisé en ce que la partie périphérique (50) est formée avec un bord crénelé comportant au moins une languette axiale (54).

5. Servomoteur selon la revendication 4, caractérisé en ce que la partie périphérique (50) est formée avec un épaulement radial (52) entre son raccordement avec la partie intermédiaire (48) et son bord (55) adjacent à une languette (54).

6. Servomoteur selon la revendication 5, caractérisé en ce que la longueur circonférentielle du bord (55) adjacent à la languette est légèrement supérieure à la longueur circonférentielle de la languette (54).

7. Servomoteur selon la revendication 6, caractérisé en ce que la languette (54) a une forme légèrement trapézoïdale isocèle, dont la petite base est dirigée vers l'extérieur.

8. Servomoteur selon la revendication 6, caractérisé en ce que le rayon extérieur du bord (55) adjacent à la languette (54) est légèrement inférieur au rayon intérieur de la languette (54).

9. Servomoteur selon la revendication 7 ou la revendication 8, caractérisé en ce que les deux demi-coquilles (38,40) sont solidarisées l'une à l'autre par déformation d'une partie externe de la languette (54), pour que cette partie déformée vienne reposer sur l'épaulement (52) de l'autre demi-coquille (38,40).

10. Servomoteur selon la revendication 9, caractérisé en ce que au moins une prédécoupe (82) est formée dans la languette (54) parallèlement à son bord libre.

11. Servomoteur selon la revendication 3, caractérisé en ce que la partie périphérique est formée avec un épaulement radial continu (52') incurvé dont la concacité est tournée dans le même sens que celle de la demi-coquille.

12. Servomoteur selon la revendication 11, caractérisé en ce que un bourrelet périphérique extérieur (80) de la membrane déroulante souple (15) est logé entre les concavités des épaulements radiaux (52') de chaque demi-coquille.

13. Servomoteur selon la revendication 12, caractérisé en ce que les deux demi-coquilles sont solidarisées l'une à l'autre par un cerclage (90) venant enserrer les deux épaulements radiaux (52').

14. Servomoteur selon la revendication 9 ou la revendication 13, caractérisé en ce que la partie tubulaire arrière (22) de la structure de paroi mobile (12) coulisse de façon étanche dans une pièce (56) reçue de façon étanche dans une ouverture (44) de la demi-coquille (40) formant la partie arrière de l'enveloppe (10) du servomoteur.

15. Servomoteur selon la revendication 14, caractérisé en ce que la pièce (56) reçue de façon étanche dans l'ouverture (44) de la demi-coquille (40) formant la partie arrière de l'enveloppe (10) du servomoteur est réalisée en matériau léger tel qu'un plastique thermoformé.

16. Servomoteur selon la revendication 9 ou la revendication 13, caractérisé en ce que la demi-coquille (38) formant la partie avant de l'enveloppe (10) est assemblée avec une pièce (64,64') comportant une ouverture centrale et des ouvertures (66) régulièrement réparties autour de cette ouverture centrale, et correspondant en nombre et en disposition géométrique aux ouvertures (46) formées autour de l'ouverture centrale (44) de la demi-coquille (38).

17. Servomoteur selon la revendication 16, caractérisé en ce que les ouvertures (46,66) formées autour des ouvertures centrales de la demi-coquille (38) et de la pièce (64) sont alignées axialement et permettent la fixation sur la demi-coquille (38) d'un maître-cylindre (36) par l'intermédiaire de vis de fixation (68) coopérant avec une bride de montage (70) du maître-cylindre.

18. Servomoteur selon la revendication 16, caractérisé en ce que les ouvertures (46,66) formées autour des ouvertures centrales de la demi-coquille (38) et de la pièce (64') sont alignées axialement et sont obturées par des rivets (88) ou des bouchons étanches.

19. Servomoteur selon la revendication 16, caractérisé en ce que les ouvertures (46,66) formées autour des ouvertures centrales de la demi-coquille (38) et de la pièce (64') sont alignées axialement et reçoivent un embout (76') comportant un clapet anti-retour (78').

## Patentansprüche

1. Pneumatischer Bremsunterstützungs-Servomotor mit einem Gehäuse (10), das einen Zylinder (38) und einen Deckel (40) aufweist und eine Symmetrieachse (X-X') besitzt, wobei das Innere des Gehäuses in dichter Weise durch eine bewegliche Wandstruktur (12), der eine nachgiebige Abrollmembran (15) zugeordnet ist, in eine permanent mit einer Unterdruckquelle verbundene vordere Kammer (14) und eine hintere Kammer (16) unterteilt ist, die selektiv mit der vorderen Kammer (14) oder einer Druckquelle mittels eines Dreiwegeventils (26) verbunden ist, das in einem hinteren rohrförmigen Abschnitt (22) der beweglichen Wandstruktur (12) angeordnet ist, der in dichter Weise in dem Deckel (40) gleitet und von einer Steuerstange (30) betätigt wird, dadurch gekennzeichnet, daß der Zylinder (38) und der Deckel (40) des Servomotors aus zwei identischen Halbschalen (38, 40) bestehen.

2. Servomotor nach Anspruch 1, dadurch gekennzeichnet, daß jede Halbschale (38, 40) einen ebenen Mittelabschnitt (42), der senkrecht zur Symmetrieachse (X-X') des Servomotors ist, einen Zwischenabschnitt (48) und einen im wesentlichen zylindrischen Umfangsabschnitt (50) enthält.

3. Servomotor nach Anspruch 2, dadurch gekennzeichnet, daß der ebene Mittelabschnitt (42) mit einer Mittelöffnung (44) sowie Öffnungen (46) versehen ist, die gleichmäßig um die Mittelöffnung (44) herum verteilt sind.

4. Servomotor nach Anspruch 3, dadurch gekennzeichnet, daß der Umfangsabschnitt (50) mit einem zinnenartigen Rand versehen ist, der wenigstens eine axiale Lasche (54) aufweist.

5. Servomotor nach Anspruch 4, dadurch gekennzeichnet, daß der Umfangsabschnitt (50) mit einer radialen Schulter (52) zwischen seiner Verbindung mit dem Mittelabschnitt (48) und seinem an eine Lasche (54) angrenzenden Rand (50) versehen ist.

6. Servomotor nach Anspruch 5, dadurch gekennzeichnet, daß die Umfangslänge des an die Lasche angrenzenden Randes (55) geringfügig größer als die Umfangslänge der Lasche (54) ist.

7. Servomotor nach Anspruch 6, dadurch gekennzeichnet, daß die Lasche (54) in geringem Maße die Form eines gleichschenkligen Trapezes hat, dessen kleine Grundseite nach außen gerichtet ist.

8. Servomotor nach Anspruch 6, dadurch gekennzeichnet, daß der Außenradius des an die Lasche (54) angrenzenden Randes (55) geringfügig kleiner als der Innenradius der Lasche (54) ist.

9. Servomotor nach Anspruch 7 oder Anspruch 8, dadurch gekennzeichnet, daß die beiden Halbschalen (38, 40) durch eine Verformung eines Außenabschnitts der Lasche (54) miteinander verbunden werden, wobei dieser verformte Abschnitt an der Schulter (52) der anderen Halbschale (38, 40) in Anlage gelangt.

10. Servomotor nach Anspruch 9, dadurch gekennzeichnet, daß in der Lasche (53) parallel zu ihrem freien Rand wenigstens ein vorgefertigter Ausschnitt (82) ausgebildet ist.

11. Servomotor nach Anspruch 3, dadurch gekennzeichnet, daß der Umfangsabschnitt mit einer durchgehenden radialen Schulter (52') ausgebildet ist, die nach innen gekrümmt ist und deren Konkavität in der gleichen Richtung wie diejenige der Halbschale gerichtet ist.

12. Servomotor nach Anspruch 11, dadurch gekennzeichnet, daß ein Außenumfangswulst (80) der nachgiebigen Abrollmembran (15) zwischen den Konkavitäten der radialen Schultern (52') der Halbschalen aufgenommen ist.

13. Servomotor nach Anspruch 12, dadurch gekennzeichnet, daß die beiden Halbschalen durch eine Umreifung (90) miteinander verbunden sind, welche die beiden radialen Schultern (52') einspannt.

14. Servomotor nach Anspruch 9 oder Anspruch 13, dadurch gekennzeichnet, daß der hintere rohrförmige Abschnitt (22) der beweglichen Wandstruktur (12) in dichter Weise in einem Teil (56) gleitet, das in dichter Weise in einer Öffnung (44) der Halbschale (40) aufgenommen ist, die den hinteren Abschnitt des Gehäuses (10) des Servomotors bildet.

15. Servomotor nach Anspruch 14, dadurch gekennzeichnet, daß das Teil (56), das in dichter Weise in der Öffnung (44) der den hinteren Abschnitt des Gehäuses (10) des Servomotors bildenden Halbschale (40) aufgenommen ist, aus einem Material mit geringem Gewicht besteht, beispielsweise einem wärmegeformten Kunststoff.

16. Servomotor nach Anspruch 9 oder Anspruch 13, dadurch gekennzeichnet, daß an der den vorderen Abschnitt des Gehäuses (10) bildenden Halbschale (38) ein Teil (64, 64') angebracht ist, das eine Mittelöffnung sowie Öffnungen (66) aufweist, die gleichmäßig um diese Mittelöffnung herum verteilt sind und deren Anzahl und geometrische Anordnung den Öffnungen (46) entspricht, die um die Mittelöffnung (44) der Halbschale (38) herum gebildet sind.

17. Servomotor nach Anspruch 16, dadurch gekennzeichnet, daß die um die Mittelöffnungen der Halbschale (38) und des Teils (64) herum gebildeten Öffnungen (46, 66) axial ausgerichtet sind und die Befestigung eines Hauptzylinders (36) an der Halbschale (38) mittels Befestigungsschrauben (68) ermöglichen, die mit einem Montageflansch (70) des Hauptzylinders zusammenwirken.

18. Servomotor nach Anspruch 16, dadurch gekennzeichnet, daß die um die Mittelöffnungen der Halbschale (38) und des Teils (64') herum gebildeten Öffnungen (46, 66) axial ausgerichtet sind und von dichten Nieten (88) oder dichten Stopfen verschlossen sind.

19. Servomotor nach Anspruch 16, dadurch gekennzeichnet, daß die um die Mittelöffnungen der Halbschale (38) und des Teils (64') herum gebildeten Öffnungen (46, 66) axial ausgerichtet sind und einen Ansatz (76') aufnehmen, der ein Rückschlagventil (78') enthält.

## Claims

1. Pneumatic servo for assisting with braking, including a casing (10) including a cylinder (38) and a cover (40) having an axis of symmetry (X-X'), the inside of the casing being divided in leaktight fashion by a movable wall structure (12) associated with a flexible unrolling diaphragm (15) into a front chamber (14) permanently connected to a source of partial vacuum, and a rear chamber (16) connected selectively to the front chamber (14) or to a source of pressure by a three-way valve (26) located in a rear tubular part (22) of the movable wall structure (12) sliding in leaktight fashion in the cover (40) and actuated by a control rod (30), characterized in that the cylinder (38) and the cover (40) of the servo are made up of two identical half-shells (38,40).

2. Servo according to Claim 1, characterized in that each half-shell (38,40) includes a plane central part (42) perpendicular to the axis of symmetry (X-X') of the servo, an intermediate part (48) and a substantially cylindrical peripheral part (50).

3. Servo according to Claim 2, characterized in that the plane central part (42) is formed with a central opening (44) and with openings (46) evenly distributed around the central opening (44).

4. Servo according to Claim 3, characterized in that the peripheral part (50) is formed with a crenellated edge including at least one axial tongue (54).

5. Servo according to Claim 4, characterized in that the peripheral part (50) is formed with a radial shoulder (52) between its connection to the intermediate part (48) and its edge (55) adjacent to a tongue (54).

6. Servo according to Claim 5, characterized in that the circumferential length of the edge (55) adjacent to the tongue is slightly greater than the circumferential length of the tongue (54).

7. Servo according to Claim 6, characterized in that the tongue (54) has a slightly isosceles trapezium shape, the small base of which points outward.

8. Servo according to Claim 6, characterized in that the outside radius of the edge (55) adjacent to the tongue (54) is slightly less than the inside radius of the tongue (54).

9. Servo according to Claim 7 or Claim 8, characterized in that the two half-shells (38,40) are secured to one another by deformation of an outer part of the tongue (54), so that this deformed part comes to rest on the shoulder (52) of the other half-shell (38,40).

10. Servo according to Claim 9, characterized in that at least one precut (82) is formed in the tongue (54) parallel to its free edge.

11. Servo according to Claim 3, characterized in that the peripheral part is formed with a curved continuous radial shoulder (52'), the concavity of which points in the same direction as that of the half-shell.

12. Servo according to Claim 11, characterized in that an outer peripheral bead (80) of the flexible unrolling diaphragm (15) is housed between the concavities of the radial shoulders (52') of each half-shell.

13. Servo according to Claim 12, characterized in that the two half-shells are secured to one another by hooping (90) which clamps the two radial shoulders (52').

14. Servo according to Claim 9 or Claim 13, characterized in that the rear tubular part (22) of the movable wall structure (12) slides in leaktight fashion in a component (56) received in leaktight fashion in an opening (44) of the half-shell (40) forming the rear part of the casing (10) of the servo.

15. Servo according to Claim 14, characterized in that the component (56) received in leaktight fashion in the opening (44) of the half-shell (40) forming the rear part of the casing (10) of the servo is produced from a lightweight material such as a thermoformed plastic.

16. Servo according to Claim 9 or Claim 13, characterized in that the half-shell (38) forming the front part of the casing (10) is assembled with a component (64,64') including a central opening and openings (66) which are evenly distributed around this central opening, and which correspond in terms of number and in terms of geometric layout to the openings (46) formed around the central opening (44) of the half-shell (38).

17. Servo according to Claim 16, characterized in that the openings (46,66) formed around the central openings in the half-shell (38) and in the component (64) are axially aligned and allow a master cylinder (36) to be fixed to the half-shell (38) by means of fixing screws (68) interacting with a mounting flange (70) of the master cylinder.

18. Servo according to Claim 16, characterized in that the openings (46,66) formed around the central openings in the half-shell (38) and in the component (64') are axially aligned and are plugged by rivets (88) or leaktight stoppers.

19. Servo according to Claim 16, characterized in that the openings (46,66) formed around the central openings in the half-shell (38) and in the component (64') are axially aligned and receive an end fitting (76') including a non-return valve (78').
